(19) 

Europäisches
Patentamt
European
Patent Office
Office européen
des brevets

(11) **EP 4 307 766 A1**

(12) **EUROPEAN PATENT APPLICATION**
published in accordance with Art. 153(4) EPC

(43) Date of publication:
**17.01.2024 Bulletin 2024/03**

(21) Application number: **21932224.5**

(22) Date of filing: **25.03.2021**

(51) International Patent Classification (IPC):
**H04W 36/00** (2009.01)   **H04W 72/04** (2023.01)

(52) Cooperative Patent Classification (CPC):
**H04W 36/00; H04W 72/04**

(86) International application number:
**PCT/CN2021/083101**

(87) International publication number:
**WO 2022/198599 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HU, Rongyi
Dongguan, Guangdong 523860 (CN)**

(74) Representative: **Mewburn Ellis LLP
Aurora Building
Counterslip
Bristol BS1 6BX (GB)**

(54) **BEAM CONFIGURATION INFORMATION METHOD, TERMINAL DEVICE, NETWORK DEVICE, AND STORAGE MEDIUM**

(57)    Implementations of the disclosure provide a method for beam configuration information, a terminal device, a network device, and a storage medium, for improving the efficiency of the terminal device in measurement and cell switch in the frequency range 2 (FR2) high-speed train scenario and avoiding premature or delayed switch. The method described in implementations of the disclosure is applied in the high-speed train scenario and may include the following. A terminal device receives beam configuration information sent by a network device, where the beam configuration information is used for transmission and reception of a physical downlink shared channel (PDSCH) or a physical downlink control channel (PDCCH), and the beam configuration information includes at least one of a transmission configuration indicator (TCI) state identity (ID), a TCI state list, or a TCI state pattern. The terminal device performs beam switch or cell switch according to the beam configuration information.

FIG. 3

EP 4 307 766 A1

**Description**

TECHNICAL FIELD

The disclosure relates to the field of communication, and more particularly, to a method for beam configuration information, a terminal device, a network device, and a storage medium.

BACKGROUND

In frequency range 2 (FR2) high-speed train scenarios, there are uni-directional beam deployment and bi-directional beam deployment, and the disclosure mainly focuses on a bi-directional deployment scenario. When a high-speed train is moving at a relatively high speed, for example, up to 350km/h, a beam switch delay may result in communication discontinuity or failure during fast moving of a terminal device.

SUMMARY

Implementations of the disclosure provide a method for beam configuration information, a terminal device, a network device, and a storage medium, for improving the efficiency of the terminal device in measurement and cell switch in the FR2 high-speed train scenario and avoiding premature or delayed switch.

A first aspect of implementations of the disclosure provides a method for beam configuration information. The method is applied in the high-speed train scenario and may include the following. A terminal device receives beam configuration information sent by a network device, where the beam configuration information is used for transmission and reception of a physical downlink shared channel (PDSCH) or a physical downlink control channel (PDCCH), and the beam configuration information includes at least one of a transmission configuration indicator (TCI) state identity (ID), a TCI state list, or a TCI state pattern. The terminal device performs beam switch or cell switch according to the beam configuration information.

A second aspect of implementations of the disclosure provides a method for beam configuration information. The method is applied in the high-speed train scenario and may include the following. A network device sends beam configuration information to a terminal device, where the beam configuration information is used for transmission and reception of a PDSCH or a PDCCH, and the beam configuration information includes at least one of a TCI state ID, a TCI state list, or a TCI state pattern. The beam configuration information is used for the terminal device to perform beam switch or cell switch.

A third aspect of implementations of the disclosure provides a terminal device. The terminal device has a function of improving the efficiency of the terminal device in measurement and cell switch in the FR2 high-speed train scenario and avoiding premature or delayed switch. This function may be implemented by hardware or by executing corresponding software by hardware. The hardware or the software includes one or more modules corresponding to the above function.

A fourth aspect of implementations of the disclosure provides a network device. The network device has a function of improving the efficiency of the terminal device in measurement and cell switch in the FR2 high-speed train scenario and avoiding premature or delayed switch. This function may be implemented by hardware or by executing corresponding software by hardware. The hardware or the software includes one or more modules corresponding to the above function.

Another aspect of implementations of the disclosure provides a terminal device. The terminal device includes a memory storing executable program codes and a transceiver and a processor coupled to the memory. The processor and the transceiver are configured to perform the method described in the first aspect of implementations of the disclosure.

Another aspect of implementations of the disclosure provides a network device. The network device includes a memory storing executable program codes and a transceiver and a processor coupled to the memory. The processor and the transceiver are configured to perform the method described in the second aspect of implementations of the disclosure.

Another aspect of implementations of the disclosure provides a computer-readable storage medium. The computer-readable storage medium includes instructions, which, when running on a computer, cause the computer to perform the method described in the first aspect or the second aspect of the disclosure.

Another aspect of implementations of the disclosure provides a chip. The chip is coupled with a memory in a terminal device, so that the chip, when running, invokes program instructions stored in the memory to cause the terminal device to perform the method described in the first aspect or the second aspect of the disclosure.

In the technical solution provided in implementations of the disclosure, the method is applied in the high-speed train scenario. The terminal device receives the beam configuration information sent by the network device, where the beam configuration information is used for transmission and reception of the PDSCH or the PDCCH, and the beam configuration information includes at least one of the TCI state ID, the TCI state list, or the TCI state pattern. The terminal device performs beam switch or cell switch according to the beam configuration information. In this way, the efficiency of the terminal device in measurement and cell switch in the FR2 high-speed train scenario can be improved and premature or delayed switch can be avoided.

BRIEF DESCRIPTION OF THE DRAWINGS

FIG. 1 is a schematic diagram of a configuration method for a TCI state of a PDSCH.
FIG. 2 is a system architecture diagram of a communication system applied in implementations of the disclosure.
FIG. 3 is a schematic diagram of an implementation of a method for beam configuration information in implementations of the disclosure.
FIG. 4A is a schematic diagram of SSB index-to-beam mapping in a bi-directional SFN in the disclosure.
FIG. 4B is a schematic diagram of SSB index-to-beam mapping in a bi-directional SFN in the disclosure.
FIG. 4C is a schematic diagram of inter-cell switch in the disclosure.
FIG. 4D is a schematic diagram of beam switch in the disclosure.
FIG. 5 is a schematic diagram of an implementation of a terminal device in implementations of the disclosure.
FIG. 6 is a schematic diagram of an implementation of a network device in implementations of the disclosure.
FIG. 7 is a schematic diagram of another implementation of a terminal device in implementations of the disclosure.
FIG. 8 is a schematic diagram of another implementation of a network device in implementations of the disclosure.

DETAILED DESCRIPTION

The following will describe technical solutions of implementations of the disclosure with reference to the accompanying drawings. Apparently, implementations described herein are merely some implementations, rather than all implementations, of the disclosure. Based on the implementations of the disclosure, all other implementations obtained by those skill in the art without creative effort shall fall within the protection scope of the disclosure.

The terms involved in implementations of the disclosure are briefly described below.

Transmission configuration indicator (TCI) state: quasi co-location (QCL) indication for downlink (DL) transmission.

When a terminal performs signal reception, in order to improve reception performance, a reception algorithm can be improved with characteristics of a transmission environment corresponding to data transmission. For example, design and parameters of a channel estimator can be optimized with statistic properties of the channel. In new radio (NR) systems, these characteristics corresponding to data transmission are represented by a QCL state (QCL-Info).

If DL transmissions come from different transmission/reception points (TRP)/panels /beams, the characteristics of the transmission environment corresponding to data transmission may vary. Therefore, in the NR system, when transmitting a DL control channel or data channel, the network side will indicate corresponding QCL state information to the terminal through a TCI state.

PDSCH-onfig ::=                    SEQUENCE {


    tci-StatesToAddModList             SEQUENCE (SIZE(1..maxNrofTCI-States)) OF TCI-
State              OPTIONAL,   -- Need N
    tci-StatesToReleaseList            SEQUENCE (SIZE(1..maxNrofTCI-States)) OF TCI-
StateId

```
ControlResourceSet ::=        SEQUENCE
        tci-StatesPDCCH-ToAddList        SEQUENCE(SIZE (1..maxNrofTCI-StatesPDCCH))
OF TCI-StateId OPTIONAL, -- Cond NotSIB1-initialBWP
        tci-StatesPDCCH-ToReleaseList       SEQUENCE(SIZE (1..maxNrofTCI-StatesPDCCH))
OF TCI-StateId OPTIONAL, -- Cond NotSIB1-initialBWP
```

One TCI state can contain the following configuration: a TCI state identity (ID) used to identify a TCI state; QCL information 1; and QCL information 2 (optional).

One QCL information contains the following information: a QCL type configuration which can be one of QCL type A, QCL type B, QCL type C, or QCL type D; a QCL reference signal configuration, including a cell ID of a cell where a reference signal is located, a bandwidth part (BWP) ID, and a reference signal ID which can be a channel state information reference signal (CSI-RS) resource ID or a synchronization signal/physical broadcast channel (PBCH) block (SSB) index.

If both QCL information 1 and QCL information 2 are configured, the QCL type of at least one QCL information should be one of type A, type B, and type C, and the QCL type of the other QCL information (if configured) should be QCL type D.

Different QCL type configurations are defined as follows.

'QCL-TypeA': {Doppler shift, Doppler spread, average delay, delay spread}
'QCL-TypeB': {Doppler shift, Doppler spread}
'QCL-TypeC': {Doppler shift, average delay}
'QCL-TypeD': {Spatial Rx parameter}

The relevant configuration in existing 38.331 is as follows.

```
TCI-State ::=          SEQUENCE {
    tci-StateId         TCI-StateId,
    qcl-Type1           QCL-Info,
    qcl-Type2           QCL-Info        OPTIONAL,   -- Need R
    ...
}
QCL-Info ::=          SEQUENCE {
    cell                ServCellIndex       OPTIONAL,   -- Need R
    bwp-Id              BWP-Id              OPTIONAL, -- Cond CSI-RS-Indicated

        referenceSignal         CHOICE {
        csi-rs                  NZP-CSI-RS-ResourceId,
        ssb                     SSB-Index
    },
    qcl-Type                ENUMERATED {typeA, typeB, typeC, typeD},
    ...
}
```

In the NR system, the network side may indicate a corresponding TCI state for a DL signal or a DL channel.

If the network side configures a QCL reference signal of a target DL channel or a target DL signal as a reference SSB or a reference CSI-RS resource through the TCI state, and the QCL type is configured as type A, type B, or type C, the terminal can assume that the target DL signal has the same large-scale parameter as the reference SSB or the reference CSI-RS resource, and the large-scale parameter is determined according to the QCL type configuration.

Similarly, if the network side configures the QCL reference signal of the target DL channel or DL signal as a reference SSB or a reference CSI-RS resource through the TCI state, and the QCL type is configured as type D, the terminal can receive the target DL signal with a same receiving beam (i.e., spatial Rx parameter) as that for receiving the reference SSB or the reference CSI-RS resource. Usually, the target DL channel or DL signal and the reference SSB or the reference CSI-RS resource of the target DL channel or DL signal are transmitted by the same TRP or the same panel or transmitted with the same beam on the network side. If two DL signals or DL channels are transmitted by different TRPs or panels, or transmitted with different beams, the two DL signals or DL channels are usually configured with different TCI states.

For a DL control channel, for example, physical downlink control channel (PDCCH), the TCI state of a corresponding control resource set (CORESET) can be indicated through a radio resource control (RRC) signaling or through an RRC signaling + a medium access control (MAC) signaling.

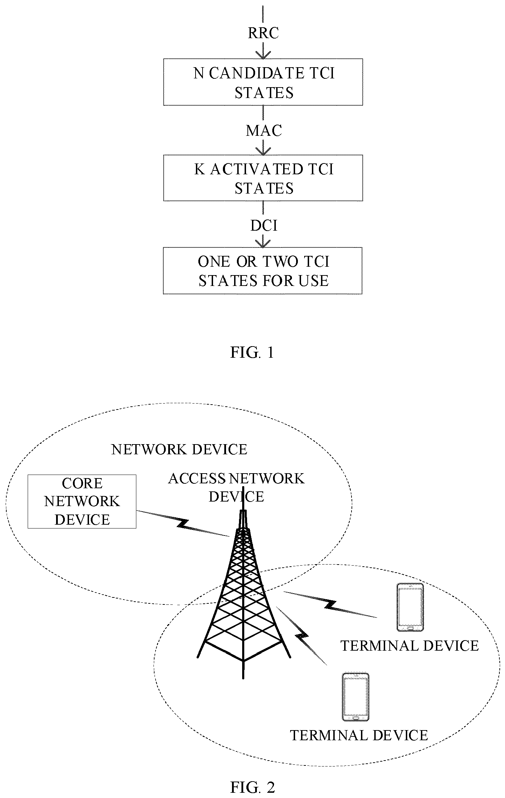

For a physical downlink shared channel (PDSCH), a set of available TCI states are indicated through an RRC signaling, some of the TCI states are activated through a MAC layer signaling, and finally, one or two TCI states are indicated from the activated TCI states through a TCI state indication field in a DCI and are used for a PDSCH scheduled by the DCI. The case of two TCI states is mainly for a scenario discussed below where multiple TRPs are similar. FIG. 1 is a schematic diagram of a configuration method for a TCI state of a PDSCH.

(3) TCI-state switch in three activation configuration manners:

MAC-CE based TCI state switch delay;
RRC based TCI state switch delay; and
DCI based TCI state switch delay.

For example, for MAC-CE based TCI state switch delay, if a target TCI state is known, until receiving a PDSCH carrying a MAC-CE activation command at slot n, the user equipment (LTE) shall be able to use a target TCI state of a serving cell where TCI state switch currently occurs and receive a PDCCH at the first slot that is after slot

$\text{n+THARQ+}3N_{slot}^{subframe,\ \mu}$ +TOk*(Tfirst-SSB + TSSB-proc)/NR slot length. Before and at slot

$\text{n+THARQ+}3N_{slot}^{subframe,\ \mu}$, the LTE shall be able to receive a PDCCH with the old TCI state.

If the target TCI state is unknown, if a target TCI state is known, until receiving a PDSCH carrying a MAC-CE activation command at slot n, the UE shall be able to use a target TCI state of a serving cell where TCI state switch currently occurs and receive a PDCCH at the first slot that is after slot

$\text{n+THARQ+}3N_{slot}^{subframe,\ \mu}\text{+TL1-RSRP+TOuk*(Tfirst-SSB+TSSB-}$ proc)/NR slot length. Before and at slot

$\text{n+THARQ+}3N_{slot}^{subframe,\ \mu}$, the UE shall be able to receive a PDCCH with the old TCI state.

The SSB shall be the QCL-Type A or QCL-Type C to target TCI state.

(4) Active TCI state list update

If the target TCI state is known, upon receiving PDSCH carrying MAC-CE active TCI state list update at slot n, LTE shall be able to receive PDCCH to schedule PDSCH with the new target TCI state at the first slot that is after slot

$\text{n+THARQ+}3N_{slot}^{subframe,\ \mu}\text{+TOk*(Tfirst-SSB+}$ TSSB-proc)/NR slot length, where THARQ, Tfirst-SSB, TSSB-proc, and TOk are defined in clause 8.10.3.

If the target TCI state is known, upon receiving PDSCH carrying MAC-CE active TCI state list update at slot n, LTE shall be able to receive PDCCH to schedule PDSCH with the new target TCI state at the first slot that is after slot

$\text{n+THARQ+}3N_{slot}^{subframe,\ \mu}\text{+TOk*(Tfirst-SSB+}$ TSSB-proc)/NR slot length, where THARQ, Tfirst-SSB, TSSB-proc, and TOk are defined in clause 8.10.3.

At present, the research on the next generation (mobile communication system) new radio (NR) system mainly considers two frequency bands, i.e., frequency range 1 (FR1) and frequency range 2 (FR2), where frequency ranges of FR1 and FR2 are illustrated in Table 1.

Table 1

| frequency band definition | corresponding frequency band range |
| --- | --- |
| FR 1 | 410 MHz-7.125 GHz |
| FR 2 | 24.25 GHz-52.6GHz |

In the FR2 high-speed train scenario, there are uni-directional beam deployment and bi-directional beam deployment, and the disclosure mainly focuses on a bi-directional deployment scenario. When a high-speed train is moving at a speed up to 350km/h, there may be the following problems to be solved.

Measurement parameter configurations are different in different high-speed train deployment scenarios.

High-speed train measurement requires for the possibility of reducing the number of measurement samples.

A beam switch delay may result in communication discontinuity or failure during fast moving of the LTE, and in the FR2 high-speed train (HST) scenario requires for a higher LTE beam scanning speed to improve the measurement speed. For example, in general, an FR2 LTE supports switch scanning with eight receiving (Rx) beams, and the Rx beam measurement speed (Rx beam sweeping speed) can be improved by reducing the number of beams or repeating a beam index.

If the TCI state of the target beam is unknown, synchronization and L1-RSRP measurement are required, so it is best that the known target TCI configured by the network is known to the LTE.

Therefore, according to the method for supporting fast cell switch or measurement proposed in the disclosure, beam information is obtained by optimizing network (pre)configuration, for example, Rx beam sweeping can be sped up and measurement time extension due to switch can be reduced through repeated reception of multiple SSBs with the same index in one SSB burst. This is necessary and valuable for improving the efficiency of measurement and reporting by the LTE and reducing the probability of premature or delayed switch. Moreover, in the high-speed train scenario, since the traveling route of the LTE is known, the network deployment such as the direction of beam scanning and beam transmission configuration is predictable, and it is recommended to pre-configure a cell switch list, spatial transmission configuration information, etc., so that the excessive switch delay or interruption due to cell switch or beam switch can be reduced.

The technical solutions of implementations of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, or vehicle to everything (V2X) communication. Implementations of the disclosure can also be applied to these communication systems.

Optionally, a communication system of implementations of the disclosure may be applied to a carrier aggregation (CA) scenario, a dual connectivity (DC) scenario, or a standalone (SA) network deployment scenario.

Optionally, the communication system of implementations of the disclosure may be applied to an unlicensed spectrum or a licensed spectrum, where the unlicensed spectrum may also be referred to as a shared spectrum, and the licensed spectrum may also be referred to as a non-shared spectrum.

Implementations of the disclosure have been described in connection with the network device and the terminal device. The terminal device may also be referred to as a user equipment (LTE), an access terminal, a subscriber unit, a subscriber station, a mobile station, a remote station, a remote terminal, a mobile device, a user terminal, a terminal, a wireless communication device, a user agent, or a user device.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

In implementations of the disclosure, the terminal device may be deployed on land, for example, deployed indoors or outdoors, and may be handheld, wearable, or vehicle-mounted. The terminal device may also be deployed on water, for example, on a ship, etc. The terminal device may also be deployed in the air, for example, on an airplane, an air balloon, a satellite, etc.

In implementations of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

By way of explanation rather than limitation, according to implementations of the disclosure, the terminal device may also be a wearable device. The wearable device may also be called a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In implementations of the disclosure, the network device may be a device configured to communicate with a mobile device, and the network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a network device (gNB) in the NR network, a network device in the future evolved PLMN, a network device in a NTN, etc.

By way of example rather than limitation, in implementations of the disclosure, the network device may be of mobility. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In implementations of the disclosure, the network device can provide services for a cell, and the terminal device communicates with the network device through a transmission resource (for example, a frequency-domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

FIG. 2 is a system architecture diagram of a communication system applied in implementations of the disclosure. The communication system may include a network device. The network device may be a device that can communicate with a terminal device (or referred to as a communication terminal or a terminal). The network device can provide a communication coverage for a specific geographical area and communicate with terminal devices in the coverage area. FIG. 2 exemplarily illustrates one network device and two terminal devices. Optionally, the communication system may include multiple network devices, and there may be other numbers of terminal devices in a coverage area of each of the network devices, which is not limited herein. Optionally, the communication system may further include other network entities such as a network controller, a mobility management entity, or the like, which is not limited herein.

The network device may include an access network device and a core network device. That is, the wireless communication system also includes multiple core networks for communication with the access network device. The access network device may be an evolutional node B ("eNB" or "e-NodeB" for short), a macro base station, a micro base station, (also referred to as "small base station"), a pico base station, an access point (AP), a transmission point (TP), or a new generation Node B (gNodeB), and the like in an LTE system, a next generation mobile communication system, a next radio (NR) system, or an authorized auxiliary access long-term evolution (LAA-LTE) system.

It should be understood that, in implementations of the disclosure, a device having a communication function in a network/system may be referred to as a communication device. Taking the communication system illustrated in FIG. 2. For example, the communication device may include the network device and the terminal device having a communication function, and the network device and the terminal device may be the specific devices described in implementations of the disclosure, which will not be repeated herein. The communication device may also include other devices in the communication system, such as a network controller, a mobility management entity, and other network entities, which is not limited herein.

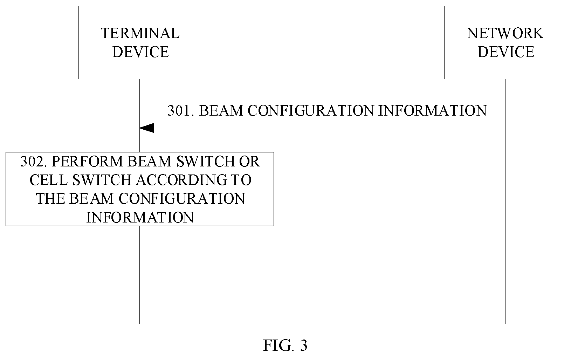

In the following implementations, the technical solution of the disclosure is further illustrated. FIG. 3 is a schematic diagram of an implementation of a method for beam configuration information in implementations of the disclosure. The method is applied in the high-speed train scenario and may include the following.

301. A terminal device receives beam configuration information sent by a network device, where the beam configuration information is used for transmission and reception of a PDSCH or a PDCCH, and the beam configuration information includes at least one of a TCI state ID, a TCI state list, or a TCI state pattern.

Optionally, before the terminal device receives the beam configuration information sent by the network device, the network device sends the beam configuration information to the terminal device, where the beam configuration information is used for transmission and reception of a PDSCH or a PDCCH, and the beam configuration information includes at least one of a TCI state ID, a TCI state list, or a TCI state pattern. The beam configuration information is used for the terminal device to perform beam switch or cell switch.

Optionally, the network device configures the TCI state pattern according to at least one of a cell, a remote radio head (RRH), or a beam deployed. That is, the TCI state pattern is configured according to at least one of a cell, an RRH, or a beam deployed by the network device.

Optionally, the TCI state pattern corresponds to a set of TCI state IDs or a TCI state list configuration.

The TCI state pattern is preconfigured by the network device according to a network topology on a traveling route.

The TCI state pattern may be referred to as a TCI state pattern or a TCI state mode.

Optionally, the network device may send the beam configuration information to the terminal device as follows. The network device sends the beam configuration information to the terminal device during RRC reconfiguration or RRC release. Alternatively, the network device sends the beam configuration information to the terminal device through a downlink control information (DCI) or a MAC.

Optionally, the terminal device may receive the beam configuration information sent by the network device as follows. The terminal device receives the beam configuration information sent by the network device, during RRC reconfiguration or RRC release. Alternatively, the terminal device receives the beam configuration information sent by the network device, through a DCI (layer 1) or a MAC (layer 2).

Optionally, the PDSCH or the PDCCH is associated with beams with a same beam index and is configured with same TCI state information, or the PDSCH or the PDCCH is configured with two TCI states and is associated with beams with different beam indexes.

Optionally, the beam index is indicated by a reference signal index or a resource ID corresponding to the beam. It can be understood that the reference signal may include a SSB, a CSI-RS, etc.

Optionally, in the beam configuration information, at least two beam indexes corresponding to a same RRH are reused, and beams corresponding to the TCI state pattern or the TCI state list are configured with a same TCI state. Alternatively, in the beam configuration information, beam indexes corresponding to adjacent RRHs in a same cell or in different cells are reused, and beams corresponding to the TCI state pattern or the TCI state list are configured with a same TCI state.

Optionally, in the beam configuration information, at least two adjacent beam indexes corresponding to a same RRH are reused, and beams corresponding to the TCI state pattern or the TCI state list are configured with a same TCI state.

Optionally, beams corresponding to the TCI state pattern or the TCI state list have a same TCI state, and the same TCI state at least includes a same TCI state ID and a same QCL type.

Optionally, the same TCI state includes a same or different QCL cell IDs, BWP IDs, or reference signals.

Optionally, TCI state patterns of different cells are reused, or TCI state lists or TCI state patterns corresponding to beams of different RRHs are reused, or TCI state lists or TCI state IDs corresponding to different beams with a same index are reused.

Optionally, the terminal device triggers change in the beam configuration information and switch of a TCI state corresponding to the PDSCH or the PDCCH during the beam switch according to a DCI or a MAC-CE configured by the network.

Optionally, a delay threshold is satisfied when the terminal device performs the beam switch.

Optionally, the TCI state, the TCI state list, or the TCI state pattern further includes: a QCL information type associated with a SSB, a CSI-RS, or a position reference signal (PRS) in a serving cell or a non-serving cell, where the QCL information type at least includes QCL-type C or QCL-type D.

Optional, beam indexes corresponding to adjacent RRHs in a same cell or in different cell are reused.

Optional, beam indexes and TCI state lists of different cells are reused.

The beam switch is classified as follows.

(1) Intra-cell beam switch

Case 1: Adjacent RRHs of a single frequency network (SFN) belong to the same cell, and a beam index is not shared between different RRHs.

Before accessing a cell or at the first time of access, index information and/or TCI state (list) information of all reference signal (RS) (such as CSI-RS, SSB, PRS, etc.) receiving beams of the terminal device in the cell at the later part of the traveling is configured, that is, an active TCI state list is configured or updated.

Different beams/panels of an RRH share the same SSB index, and a SSB signal is transmitted repeatedly through beams with the same SSB index but different directions. The terminal device can repeatedly receive the SSB signal multiple times during one receiving beam scanning, which improves the measurement speed and the beam scanning speed.

Beams with the same SSB index can be configured with the same TCI state information. During switching between different beams, a TCI state corresponding to an RS also needs to be switched and a certain switch delay requirement needs to be satisfied.

TCI state switch: a conditional TCI state list is preconfigured.

QCL-TypeD to a PRS/SSB in serving cell or non-serving cell, QCL-Type C to a SSB in serving cell or non-serving cell; or
QCL-TypeD is used for supporting FR2; or
QCL-TypeC is used for assisting estimating the timing of PRS.

The corresponding English translation is as follows.

QCL-TypeD to a PRS/SSB in serving cell or non-serving cell. QCL-Type C to a SSB in serving cell or non-serving cell.

QCL-TypeD is used for supporting FR2.

QCL-TypeC is used for assisting estimating the timing of PRS.

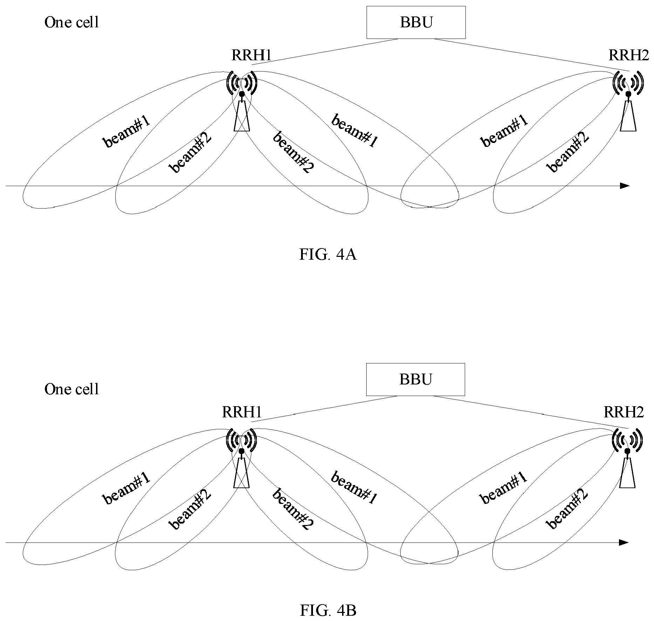

FIG. 4A is a schematic diagram of SSB index-to-beam mapping in a bi-directional SFN in the disclosure.

Case 2: Adjacent RRHs belong to the same cell, and a beam index is shared between different RRHs.

Before accessing a cell or at the first time of access, index information and/or TCI state (list) information of all RS (such as CSI-RS, SSB, PRS, etc.) receiving beams of the terminal device in the cell at the later part of the traveling is configured, that is, an active TCI state list is configured or updated.

Some beams/panels corresponding to an RRH share the same SSB index to repeatedly transmit a SSB signal, a beam index list is formed, and beam indexes corresponding to adjacent RRHs are repeated in order exactly as this set of beams indexes, such as, 0123 (the beam index list of RRH1), 0123 (the beam index list of RRH2), and 0123 (the beam index list of RRH3). SSB indexes are preconfigured, and the LTE can predict beam information, thereby improving the efficiency of switch and measurement.

Some beams/panels corresponding to an RRH share the same SSB index to repeatedly transmit a SSB signal, a beam index list is formed, and indexes of adjacent beams of two adjacent RRHs are the same and are repeated, such as 0123 (the beam index list of RRH1), 3210 (the beam index list of RRH2), and 0123 (the beam index list of RRH2). SSB indexes are preconfigured, so that the terminal device can predict beam information, thereby improving the efficiency of switch and measurement.

FIG. 4B is a schematic diagram of SSB index-to-beam mapping in a bi-directional SFN in the disclosure.

Beams with the same SSB index are configured with the same TCI state information.

During switching between different beams, a TCI state corresponding to an RS also needs to be switched and a delay threshold needs to be satisfied, which can be understood as satisfying a certain switch delay requirement.

TCI state switch: a conditional TCI state list is preconfigured.

QCL-TypeD to a PRS/SSB in serving cell or non-serving cell. QCL-Type C to a SSB in serving cell or non-serving cell.

QCL-TypeD is used for supporting FR2.

QCL-TypeC is used for assisting estimating the timing of PRS.

(2) Inter-cell beam switch

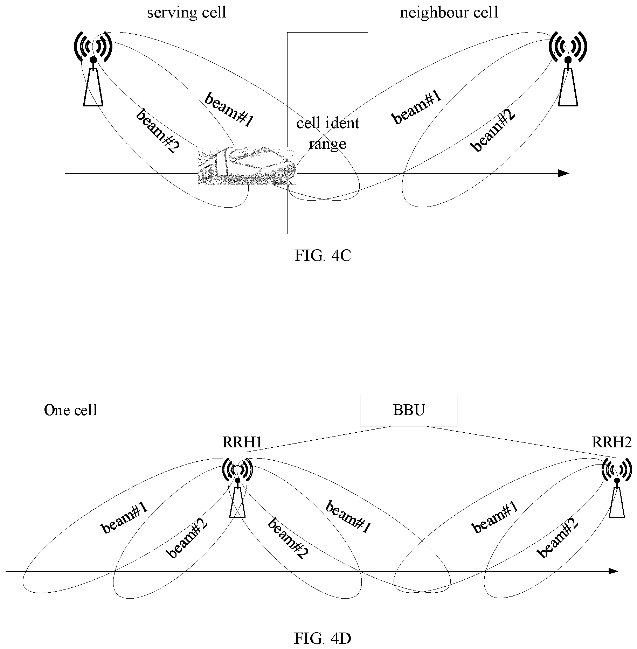

Case 1: Similar to case 1 in (1), in each cell, beam indexes and a TCI state list are preconfigured, and this two beam information of all cells are repeated. FIG. 4C is a schematic diagram of inter-cell switch in the disclosure.

Case 2: Since beam switch and TCI state configuration or TCI state list update require for a certain delay, support for preconfigured beam information is introduced to support beam early switch, thereby avoiding delayed switch and interruption resulted from the switch delay.

Case 1: The network device is limited to configure only one reference signal for performing continuous cell measurement.

Case 2: Switch between SSB beam and CSI-RS beam for inter-cell switch measurement, where a beam index and/or a TCI state (conditional TCI state list) of a RS of a target cell is preconfigured.

An auxiliary network signaling is introduced to indicate the deployment and the configuration of a current network of the LTE.

For example, a one-bit signaling is used to distinguish case 1/2.

For example, a conditional TCI state list is preconfigured.

(3) Preconfigured TCI state pattern suitable for intra-cell beam switch or inter-cell beam switch

The network device (pre)configures a TCI state pattern for some DL reference signals. The TCI state pattern is configured per cell (multiple UEs) per RS or configured per LTE.

Case 1: Switch between beams corresponding to different RRHs in the same cell.

Case 2: Switch between beams corresponding to different RRHs in different cells.

The configuration of the TCI state pattern depends on a cell, an RRH, or a beam deployed by the network device. That is, the TCI state pattern is preconfigured for the LTE by the network according to the network topology on a traveling route.

Optionally, during pre-configuration, reuse of beam indexes corresponding to the same RRH has been considered, and the TCI state is shared. For example, all beam indexes corresponding to a certain RRH are 12211221, which can correspond to various possible TCI state pattern configurations.

TCI state pattern 1= TCI state list#DCCDDCCD.
TCI state pattern 2= TCI state list#BCCBBCCB.

Optionally, beam indexes before and after switch between adjacent RRHs are reused, but the TCI state is not shared.

TCI state pattern 1 corresponding to RRH1 is different from TCI state pattern 2 corresponding to RRH2.

Optionally, RRC (layer 3) reconfiguration triggered by a DCI (layer 1) or a MAC (layer 2) indicates whether beam index reuse is supported for beams of a current cell or RRH, and the TCI state pattern is updated at the same time.

FIG. 4D is a schematic diagram of beam switch in the disclosure.

302. The terminal device performs beam switch or cell switch according to the beam configuration information.

The terminal device may perform intra-cell beam switch or inter-cell beam switch according to the beam configuration information as follows.

When performing cell switch, the terminal device performs beam switch or transmission of the PDSCH or the PDCCH after switching to a target cell according to beam configuration information of a source cell or a non-serving cell, where the beam configuration information is indicated by an RRC connection release message or other network assistance information. Alternatively, when performing the intra-cell beam switch, the terminal device performs beam switch or transmission of the PDSCH or the PDCCH after switching to the target cell according to beam configuration information of a serving cell, where the beam configuration information is indicated by a DCI, a MAC-CE, or an RRC connection release message or other network assistance information.

Optionally, the beam switch may include switch between beams corresponding to different RRHs in a same cell or switch between beams corresponding to adjacent RRHs during inter-cell switch.

Optionally, the method further includes the following. The terminal device obtains a measurement result by performing signal measurement according to the beam configuration information. The terminal device reports the measurement result to the network device.

Optionally, the signal measurement includes: radio resource management (RRM) measurement, radio link monitoring (RLM) measurement, beam failure detection (BFD) measurement, or positioning reference signal (PRS) positioning measurement that are based on a SSB or a CSI-RS.

Optionally, the method further includes the following. The terminal device sends a request for updating the beam configuration information to the network device, where the request includes an inter-cell switch request and an intra-cell switch request. The network device preconfigures or updates the beam configuration information. The terminal device receives updated beam configuration information sent by the network device.

Optionally, the TCI state, the TCI state list, or the TCI state pattern further includes: a QCL information type associated with a SSB, a CSI-RS, or a PRS in a serving cell or a non-serving cell, where the QCL information type at least includes QCL-type C or QCL-type D.

In implementations of the disclosure, the terminal device receives the beam configuration information sent by the network device, where the beam configuration information is used for transmission and reception of a PDSCH or a PDCCH, and the beam configuration information includes at least one of a TCI state ID, a TCI state list, or a TCI state pattern. The terminal device performs beam switch or cell switch according to the beam configuration information. Implementations of the disclosure are mainly applicable to the FR2 HST scenario. Since the traveling route of the terminal device is known, the deployment of network device such as the direction of beam scanning and beam transmission configuration is predictable. Through a (pre)configured cell switch list, spatial transmission configuration information (such as a beam index, a TCI state list/pattern), etc., the excessive switch delay or interruption due to cell switch or beam switch can be reduced. Beam information is obtained by optimizing network (pre)configuration, for example, Rx beam sweeping can be sped up and measurement time extension due to switch can be reduced through repeated reception of multiple SSBs with the same index in one SSB burst. In this way, the efficiency of measurement and reporting by the terminal device can be improved and the probability of premature or delayed switch can be reduced. Further, through network pre-configuration or beam configuration information merging and repetition and the like, the efficiency of the terminal device in measurement and cell switch in the FR2 high-speed train scenario can be improved and premature or delayed switch can be avoided.

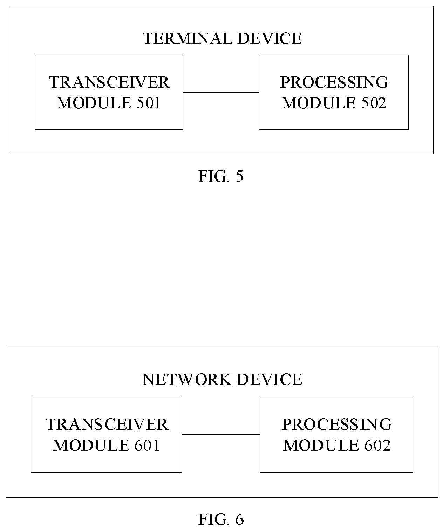

FIG. 5 is a schematic diagram of an implementation of a terminal device in implementations of the disclosure. The terminal device includes a transceiver module 501 and a processing module 502. The transceiver module 501 is configured to receive beam configuration information sent by a network device, where the beam configuration information is used for transmission and reception of a PDSCH or a PDCCH, and the beam configuration information includes at least one of a TCI state ID, a TCI state list, or a TCI state pattern. The processing module 502 is configured to perform beam switch or cell switch according to the beam configuration information.

Optionally, the TCI state pattern is configured according to at least one of a cell, a RRH, or a beam deployed by the network device.

Optionally, the TCI state pattern corresponds to a set of TCI state IDs or a TCI state list configuration.

Optionally, the transceiver module 501 is specifically configured to: receive the beam configuration information sent by the network device, during RRC reconfiguration or RRC release; or receive the beam configuration information sent by the network device, through a DCI or a MAC.

Optionally, the PDSCH or the PDCCH is associated with beams with a same beam index and is configured with same TCI state information; or the PDSCH or the PDCCH is configured with two TCI states and is associated with beams with different beam indexes.

Optionally, the beam index is indicated by a reference signal index or a resource ID corresponding to the beam.

Optionally, in the beam configuration information, at least two beam indexes corresponding to a same RRH are reused, and beams corresponding to the TCI state pattern or the TCI state list are configured with a same TCI state; or in the beam configuration information, beam indexes corresponding to adjacent RRHs in a same cell or in different cells are reused, and beams corresponding to the TCI state pattern or the TCI state list are configured with a same TCI state.

Optionally, beams corresponding to the TCI state pattern or the TCI state list have a same TCI state, and the same TCI state at least includes a same TCI state ID and a same QCL type.

Optionally, the same TCI state includes a same or different QCL cell IDs, BWP IDs, or reference signals.

Optional, TCI state patterns of different cells are reused; or TCI state lists or TCI state patterns corresponding to beams of different RRHs are reused; or TCI state lists or TCI state IDs corresponding to different beams with a same index are reused.

Optionally, the processing module 502 is further configured to trigger change in the beam configuration information and switch of a TCI state corresponding to the PDSCH or the PDCCH during the beam switch according to a DCI or a MAC-CE configured by the network.

Optionally, a delay threshold is satisfied when the terminal device performs the beam switch.

Optionally, the processing module 502 is specifically configured to: when performing cell switch, perform beam switch or transmission of the PDSCH or the PDCCH after switching to a target cell according to beam configuration information of a source cell or a non-serving cell, where the beam configuration information is indicated by an RRC connection release message; or when performing intra-cell beam switch, perform beam switch or transmission of the PDSCH or the PDCCH after switching to the target cell according to beam configuration information of a serving cell, where the beam configuration information is indicated by a DCI, a MAC-CE, or an RRC connection release message.

Optionally, the beam switch includes switch between beams corresponding to different RRHs in a same cell or switch between beams corresponding to adjacent RRHs during inter-cell switch.

Optionally, the processing module 502 is further configured to obtain a measurement result by performing signal measurement according to the beam configuration information; and the transceiver module 501 is further configured to report the measurement result to the network device.

Optionally, the signal measurement includes: RRM measurement, RLM measurement, BFD measurement, or PRS positioning measurement that are based on a SSB or a CSI-RS.

Optionally, the transceiver module 501 is further configured to: send a request for updating the beam configuration information to the network device, where the request includes an inter-cell switch request and an intra-cell switch request; and receive updated beam configuration information sent by the network device.

Optionally, the TCI state, the TCI state list, or the TCI state pattern further includes: a QCL information type associated with a SSB, a CSI-RS, or a PRS in a serving cell or a non-serving cell, where the QCL information type at least includes QCL-type C or QCL-type D.

FIG. 6 is a schematic diagram of an implementation of a network device in implementations of the disclosure. The network device includes a transceiver module 601. The transceiver module 601 is configured to send beam configuration information to a terminal device, where the beam configuration information is used for transmission and reception of a PDSCH or a PDCCH, the beam configuration information includes at least one of a TCI state ID, a TCI state list, or a TCI state pattern, and the beam configuration information is used for the terminal device to perform beam switch or cell switch.

Optionally, the network device further includes a processing module 602. The processing module 602 is configured to configure the TCI state pattern according to at least one of a cell, a RRH, or a beam deployed.

Optionally, the TCI state pattern corresponds to a set of TCI state IDs or a TCI state list configuration.

Optionally, the transceiver module 601 is specifically configured to: send the beam configuration information to the terminal device during RRC reconfiguration or RRC release; or send the beam configuration information to the terminal device through a DCI or a MAC.

Optionally, the PDSCH or the PDCCH is associated with beams with a same beam index and is configured with same TCI state information; or the PDSCH or the PDCCH is configured with two TCI states and is associated with beams with different beam indexes.

Optionally, the beam index is indicated by a reference signal index or a resource ID corresponding to the beam.

Optionally, in the beam configuration information, at least two beam indexes corresponding to a same RRH are reused, and beams corresponding to the TCI state pattern or the TCI state list are configured with a same TCI state; or in the beam configuration information, beam indexes corresponding to adjacent RRHs in a same cell or in different cells are reused, and beams corresponding to the TCI state pattern or the TCI state list are configured with a same TCI state.

Optionally, beams corresponding to the TCI state pattern or the TCI state list have a same TCI state, and the same TCI state at least includes a same TCI state ID and a same QCL type.

Optionally, the same TCI state includes a same or different QCL cell IDs, BWP IDs, or reference signals.

Optional, TCI state patterns of different cells are reused; or TCI state lists or TCI state patterns corresponding to beams of different RRHs are reused; or TCI state lists or TCI state IDs corresponding to different beams with a same index are reused.

Optionally, the beam switch includes switch between beams corresponding to different RRHs in a same cell or switch between beams corresponding to adjacent RRHs during inter-cell switch.

Optionally, the TCI state, the TCI state list, or the TCI state pattern further includes: a quasi co-location (QCL) information type associated with a synchronization signal/physical broadcast channel (PBCH) block (SSB), a channel state information reference signal (CSI-RS), or a positioning reference signal (PRS) in a serving cell or a non-serving cell, where the QCL information type at least includes QCL-type C or QCL-type D.

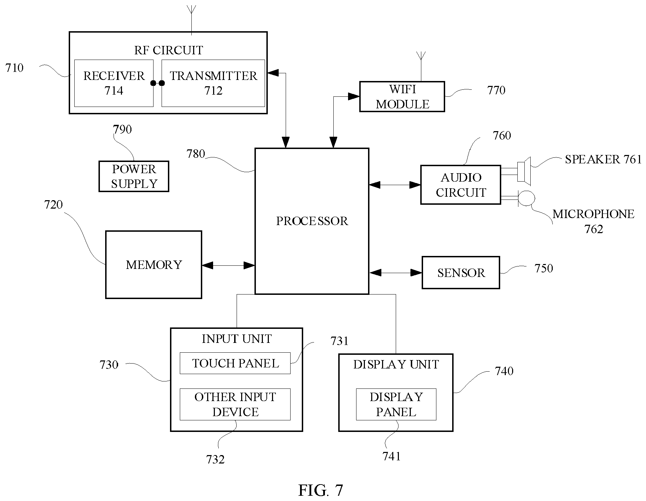

Corresponding to at least one method in foregoing implementations applied to a terminal device, implementations of the disclosure further provide one or more types of terminal devices. The terminal device in implementations of the disclosure may implement any implementation manner in foregoing methods. FIG. 7 is a schematic diagram of another implementation of a terminal device in implementations of the disclosure. For example, for illustration, the terminal device is a mobile phone and may include a radio frequency (RF) circuit 710, a memory 720, an input unit 730, a display unit 740, a sensor 750, an audio circuit 760, a wireless fidelity (WiFi) module 770, a processor 780, a power supply 790, and other components. The radio frequency circuit 710 includes a receiver 714 and a transmitter 712. Those skilled in the art can understand that the structure of the mobile phone illustrated in FIG. 7 does not constitute a limitation to the mobile phone. The mobile phone may include more or fewer components than illustrated and may combine some components or adopt different component arrangement.

In the following, various components of the mobile phone will be described in detail with reference to FIG. 7.

The RF circuit 710 is configured to transmit or receive information, or transmit or receive a signal during a call. In particular, the RF circuit 710 is configured to provide DL information to the processor 780 for processing after receiving the DL information from a base station, and transmit uplink (UL) data to the base station. Generally, the RF circuit 710 includes but is not limited to an antenna, at least one amplifier, a transceiver, a coupler, a low noise amplifier (LNA), a duplexer, and the like. In addition, the RF circuit 710 may also communicate with the network and other devices via wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS) and so on.

The memory 720 is configured to store software programs and modules, and the processor 780 is configured to execute various function applications and data processing of the mobile phone by running the software programs and the modules stored in the memory 720. The memory 720 mainly includes a program storage area and a data storage area. The program storage area may store an operating system, and application programs required for at least one function (such as a sound playback function, an image playback function, etc.). The data storage area may store data (such as audio data, phonebook, etc.) created according to use of the mobile phone, and so on. In addition, the memory 720 may include a high-speed RAM, and may further include a non-volatile memory such as at least one disk storage device, a flash device, or other non-volatile solid storage devices.

The input unit 730 may be configured to receive input digital or character information and generate key signal input associated with user setting and function control of the mobile phone. Specifically, the input unit 730 may include a touch panel 731 and other input devices 732. The touch panel 731, which is also referred to as a touch screen, can collect a touch operation of the user on or near the touch panel 731 (for example, the user uses a finger, a stylus, and any other suitable object or attachment on or near the touch panel 731), and drive a corresponding connection device according to the preset programs. Optionally, the touch panel 731 may include two parts, i.e., a touch detection device and a touch controller. The touch detection device detects the direction of the user's touch, detects a signal resulted from the touch operation, and transmits the signal to the touch controller. The touch controller receives information of the touch from the touch detection device, converts the information into a touch coordinate, and transmits the coordinate to the processor 780, and can receive and execute commands transmitted by the processor 780. In addition, the touch panel 731 can be implemented by utilizing capacitive, resistive, infrared, and surface acoustic wave technologies. In addition to the touch panel 731, the input unit 730 may also include other input devices 732. Specifically, the other input devices 932 may include but are not limit to one or more of a physical key, a function key (such as a volume control key, a switch key, etc.), a trackball, a mouse, a joystick and the like.

The display unit 740 is configured to display information input by the user or information provided for the user or various menus of the mobile phone. The display unit 740 may include a display panel 741, and alternatively, the display panel 741 may be in the form of a liquid crystal display (LCD), an organic light-emitting diode (OLED) and so on. Further, the touch panel 731 may cover the display panel 741, and when the touch panel 731 detects a touch operation on or near the touch panel 731, the touch panel 731 transmits the touch operation to the processor 780 to determine the type of the touch event, and then the processor 780 provides a corresponding visual output on the display panel 741 according to the type of the touch event. Although the touch panel 731 and the display panel 741 are illustrated as two separate components in FIG. 7 to realize the input and output functions of the mobile phone, in some implementations, the touch panel 731 may be integrated with the display panel 741 to implement the input and output functions of the mobile phone.

The mobile phone may also include at least one sensor 750, such as a light sensor, a motion sensor, and other sensors. Specifically, the light sensor may include an ambient light sensor and a proximity sensor, among which the ambient light sensor may adjust the brightness of the display panel 741 according to ambient lights, and the proximity sensor may turn off the display panel 741 and/or backlight when the mobile phone reaches nearby the ear. As a kind of motion sensor, the accelerometer sensor can detect the magnitude of acceleration in all directions (typically three axes) and when the mobile phone is stationary, the accelerometer sensor can detect the magnitude and direction of gravity; the accelerometer sensor can also identify mobile-phone gestures related applications (such as vertical and horizontal screen switch, related games, magnetometer attitude calibration), or the accelerometer sensor can be used for vibration-recognition related functions (such as a pedometer, percussion) and so on. The mobile phone can also be equipped with a gyroscope, a barometer, a hygrometer, a thermometer, and infrared sensor and other sensors, and it will not be repeated herein.

The audio circuit 760, the speaker 761, the microphone 762 may provide an audio interface between the user and the mobile phone. The audio circuit 760 may convert the received audio data into electrical signals and transfer the electrical signals to the speaker 761; thereafter the speaker 761 converts the electrical signals into sound signals to output. On the other hand, the microphone 762 converts the received sound signals into electrical signals, which will be received and converted into audio data by the audio circuit 760 to output. The audio data is then processed and transmitted by the processor 780 via a RF circuit 710 to another mobile phone for example, or, the audio data is output to the memory 720 for further processing.

Wi-Fi belongs to a short-range wireless transmission technology. With aid of the Wi-Fi module 770, the mobile phone may assist the user in E-mail receiving and sending, webpage browsing, access to streaming media and the like. Wi-Fi provides users with wireless broadband Internet access. Although the Wi-Fi module 770 is illustrated in FIG. 7, the Wi-Fi module 770 is not essential to the mobile phone and can be omitted according to actual needs without departing from the essential nature of the present disclosure.

The processor 780 is the control center of the mobile phone and is configured to connect various parts of the whole mobile phone through various interfaces and lines, run or execute software programs and/or modules stored in the memory 720, and invoke data stored in the memory 720 to perform various functions of the mobile phone and process data, thereby monitoring the mobile phone as a whole. In at least one implementation, the processor 780 may include one or more processing units. For example, the processor 780 may integrate an application processor and a modem processor, where the application processor is configured to handle the operating system, the user interface, the application, and so on, and the modem processor is mainly configured to process wireless communication. It will be understood that the above-mentioned modem processor may not be integrated into the processor 780.

The mobile phone also includes a power supply 790 (e.g., a battery) that supplies power to various components. For instance, the power supply 790 may be logically connected to the processor 780 via a power management system to enable management of charging, discharging, and power consumption through the power management system. Although not illustrated, the mobile phone may include a camera, a Bluetooth module, etc., and the disclosure will not elaborate herein.

In implementations of the disclosure, the terminal device is applied in the high-speed train scenario. The RF circuit 710 is configured to receive beam configuration information sent by a network device, where the beam configuration information is used for transmission and reception of a PDSCH or a PDCCH, and the beam configuration information includes at least one of a TCI state ID, a TCI state list, or a TCI state pattern. The processor 780 is configured to perform beam switch or cell switch according to the beam configuration information.

Optionally, the TCI state pattern is configured according to at least one of a cell, a RRH, or a beam deployed by the network device.

Optionally, the TCI state pattern corresponds to a set of TCI state IDs or a TCI state list configuration.

Optionally, the RF circuit 710 is specifically configured to: receive the beam configuration information sent by the network device, during RRC reconfiguration or RRC release; or receive the beam configuration information sent by the network device, through a DCI or a MAC.

Optionally, the PDSCH or the PDCCH is associated with beams with a same beam index and is configured with same TCI state information; or the PDSCH or the PDCCH is configured with two TCI states and is associated with beams with different beam indexes.

Optionally, the beam index is indicated by a reference signal index or a resource ID corresponding to the beam.

Optionally, in the beam configuration information, at least two beam indexes corresponding to a same RRH are reused, and beams corresponding to the TCI state pattern or the TCI state list are configured with a same TCI state; or in the beam configuration information, beam indexes corresponding to adjacent RRHs in a same cell or in different cells are reused, and beams corresponding to the TCI state pattern or the TCI state list are configured with a same TCI state.

Optionally, beams corresponding to the TCI state pattern or the TCI state list have a same TCI state, and the same TCI state at least includes a same TCI state ID and a same QCL type.

Optionally, the same TCI state includes a same or different QCL cell IDs, BWP IDs, or reference signals.

Optional, TCI state patterns of different cells are reused; or TCI state lists or TCI state patterns corresponding to beams of different RRHs are reused; or TCI state lists or TCI state IDs corresponding to different beams with a same index are reused.

Optionally, the processor 780 is further configured to: trigger change in the beam configuration information and switch of a TCI state corresponding to the PDSCH or the PDCCH during the beam switch according to a DCI or a MAC-CE configured by the network.

Optionally, a delay threshold is satisfied when the terminal device performs the beam switch.

Optionally, the processor 780 is specifically configured to: when performing cell switch, perform beam switch or transmission of the PDSCH or the PDCCH after switching to a target cell according to beam configuration information of a source cell or a non-serving cell, where the beam configuration information is indicated by an RRC connection release message; or when performing intra-cell beam switch, perform beam switch or transmission of the PDSCH or the PDCCH after switching to the target cell according to beam configuration information of a serving cell, where the beam configuration information is indicated by a DCI, a MAC-CE, or an RRC connection release message.

Optionally, the beam switch includes switch between beams corresponding to different RRHs in a same cell or switch between beams corresponding to adjacent RRHs during inter-cell switch.

Optionally, the processor 780 is further configured to obtain a measurement result by performing signal measurement according to the beam configuration information. The RF circuit 710 is further configured to report the measurement result to the network device.

Optionally, the signal measurement includes: RRM measurement, RLM measurement, BFD measurement, or PRS positioning measurement that are based on a SSB or a CSI-RS.

Optionally, the RF circuit 710 is further configured to send a request for updating the beam configuration information to the network device, where the request includes an inter-cell switch request and an intra-cell switch request; and receive updated beam configuration information sent by the network device.

Optionally, the TCI state, the TCI state list, or the TCI state pattern further includes: a QCL information type associated with a SSB, a CSI-RS, or a PRS in a serving cell or a non-serving cell, where the QCL information type at least includes QCL-type C or QCL-type D.

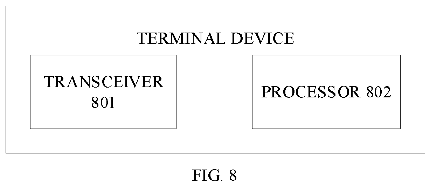

FIG. 8 is a schematic diagram of another implementation of a network device in implementations of the disclosure. The network device is applied in the high-speed train scenario and includes a transceiver 801. The transceiver 801 is configured to send beam configuration information to a terminal device, where the beam configuration information is used for transmission and reception of a PDSCH or a PDCCH, the beam configuration information includes at least one of a TCI state ID, a TCI state list, or a TCI state pattern, and the beam configuration information is used for the terminal device to perform beam switch or cell switch.

Optionally, the network device further includes a processor 802. The processor 802 is configured to configure the TCI state pattern according to at least one of a cell, a RRH, or a beam deployed.

Optionally, the TCI state pattern corresponds to a set of TCI state IDs or a TCI state list configuration.

Optionally, the transceiver 801 is specifically configured to send the beam configuration information to the terminal device during RRC reconfiguration or RRC release; or send the beam configuration information to the terminal device through a DCI or a MAC.

Optionally, the PDSCH or the PDCCH is associated with beams with a same beam index and is configured with same TCI state information; or the PDSCH or the PDCCH is configured with two TCI states and is associated with beams with different beam indexes.

Optionally, the beam index is indicated by a reference signal index or a resource ID corresponding to the beam.

Optionally, in the beam configuration information, at least two beam indexes corresponding to a same RRH are reused, and beams corresponding to the TCI state pattern or the TCI state list are configured with a same TCI state; or in the beam configuration information, beam indexes corresponding to adjacent RRHs in a same cell or in different cells are reused, and beams corresponding to the TCI state pattern or the TCI state list are configured with a same TCI state.

Optionally, beams corresponding to the TCI state pattern or the TCI state list have a same TCI state, and the same TCI state at least includes a same TCI state ID and a same QCL type.

Optionally, the same TCI state includes a same or different QCL cell IDs, BWP IDs, or reference signals.

Optional, TCI state patterns of different cells are reused; or TCI state lists or TCI state patterns corresponding to beams of different RRHs are reused; or TCI state lists or TCI state IDs corresponding to different beams with a same index are reused.

Optionally, the beam switch includes switch between beams corresponding to different RRHs in a same cell or switch between beams corresponding to adjacent RRHs during inter-cell switch.

Optionally, the TCI state, the TCI state list, or the TCI state pattern further includes: a QCL information type associated with a SSB, a CSI-RS, or a PRS in a serving cell or a non-serving cell, where the QCL information type at least includes QCL-type C or QCL-type D.

The functions in implementations described above may be implemented in whole or in part through software, hardware, firmware, or any combination thereof. When implemented through software, the functions may be implemented in whole or in part in a form of a computer program product. The computer program product includes one or more computer instructions. When the computer program instructions are loaded and executed on a computer, processes or functions are generated in whole or in part according to implementations of the disclosure. The computer may be a general-purpose computer, a special purpose computer, a computer network, or another programmable apparatus. The computer instructions may be stored in a computer-readable storage medium, or may be transmitted from one computer-readable storage medium to another computer-readable storage medium. For example, the computer instructions may be transmitted from a website site, a computer, a server, or a data center to another website site, computer, server, or data center through a wired mode (e.g., a coaxial cable, an optical fiber, and a digital subscriber line (DSL)) or a wireless mode (e.g., infrared radiation, radio, and microwave.). The computer-readable storage medium may be any available medium which a computer may access to, or a data storage device such as a server or data center that includes one or more available media integrated therein. The available medium may be a magnetic medium (e.g., a floppy disk, a hard disk, and a magnetic tape), an optical medium (e.g., a digital video disc (DVD)), or a semiconductor medium (e.g., a solid state disk (SSD)), or the like.

The terms "first", "second", "third", and "fourth" (if present) in the specification, claims, and drawings of the disclosure are used to distinguish similar objects, but not to describe a specific order. It should be understood that data so used is interchangeable where appropriate so that implementations described herein can be implemented in an order other than illustrated or described herein. In addition, the terms "including", "comprising", "having", and any variations thereof are intended to cover non-exclusive inclusions. For example, a process, a method, a system, a product, or a device involving a series of steps or units is not necessarily limited to those steps or units explicitly listed, but may include steps or units not explicitly listed or other steps or units inherent to the process, the method, the product, or the device.

**Claims**

1. A method for beam configuration information, comprising:

   receiving, by a terminal device, beam configuration information sent by a network device, the beam configuration information being used for transmission and reception of a physical downlink shared channel (PDSCH) or a physical downlink control channel (PDCCH), and the beam configuration information comprising at least one of a transmission configuration indicator (TCI) state identity (ID), a TCI state list, or a TCI state pattern; and
   performing, by the terminal device, beam switch or cell switch according to the beam configuration information.

2. The method of claim 1, wherein the TCI state pattern is configured according to at least one of a cell, a remote radio head (RRH), or a beam deployed by the network device.

3. The method of claim 1, wherein the TCI state pattern corresponds to a set of TCI state IDs or a TCI state list configuration.

4. The method of any of claims 1 to 3, wherein receiving, by the terminal device, the beam configuration information sent by the network device comprises:

   receiving, by the terminal device, the beam configuration information sent by the network device, during radio resource control (RRC) reconfiguration or RRC release; or
   receiving, by the terminal device, the beam configuration information sent by the network device, through a downlink control information (DCI) or a medium access control (MAC).

5. The method of any of claims 1 to 4, wherein the PDSCH or the PDCCH is associated with beams with a same beam index and is configured with same TCI state information; or
   the PDSCH or the PDCCH is configured with two TCI states and is associated with beams with different beam indexes.

6. The method of claim 5, wherein the beam index is indicated by a reference signal index or a resource ID corresponding to the beam.

7. The method of any of claims 1 to 6, wherein

   in the beam configuration information, at least two beam indexes corresponding to a same RRH are reused, and beams corresponding to the TCI state pattern or the TCI state list are configured with a same TCI state; or
   in the beam configuration information, beam indexes corresponding to adjacent RRHs in a same cell or in different cells are reused, and beams corresponding to the TCI state pattern or the TCI state list are configured with a same TCI state.

8. The method of claim 6, wherein beams corresponding to the TCI state pattern or the TCI state list have a same TCI state, and the same TCI state at least comprises a same TCI state ID and a same quasi co-location (QCL) type.

9. The method of claim 8, wherein the same TCI state comprises a same or different QCL cell IDs, bandwidth part (BWP) IDs, or reference signals.

10. The method of any of claims 1 to 9, wherein

    TCI state patterns of different cells are reused; or
    TCI state lists or TCI state patterns corresponding to beams of different RRHs are reused; or
    TCI state lists or TCI state IDs corresponding to different beams with a same index are reused.

11. The method of any of claims 1 to 10, further comprising:
    triggering, by the terminal device, change in the beam configuration information and switch of a TCI state corresponding to the PDSCH or the PDCCH during the beam switch according to a DCI or a media access control-control element (MAC-CE) configured by the network.

12. The method of claim 11, wherein a delay threshold is satisfied when the terminal device performs the beam switch.

13. The method of any of claims 1 to 12, wherein performing, by the terminal device, intra-cell beam switch or inter-cell beam switch according to the beam configuration information comprises:

  when performing cell switch,
  performing, by the terminal device, beam switch or transmission of the PDSCH or the PDCCH after switching to a target cell according to beam configuration information of a source cell or a non-serving cell, wherein the beam configuration information is indicated by an RRC connection release message; or
  when performing the intra-cell beam switch,
  performing, by the terminal device, beam switch or transmission of the PDSCH or the PDCCH after switching to the target cell according to beam configuration information of a serving cell, wherein the beam configuration information is indicated by a DCI, a MAC-CE, or an RRC connection release message.

14. The method of any of claims 11 to 13, wherein the beam switch comprises switch between beams corresponding to different RRHs in a same cell or switch between beams corresponding to adjacent RRHs during inter-cell switch.

15. The method of any of claims 1 to 14, further comprising:

  obtaining, by the terminal device, a measurement result by performing signal measurement according to the beam configuration information; and
  reporting, by the terminal device, the measurement result to the network device.

16. The method of claim 15, wherein the signal measurement comprises: radio resource management (RRM) measurement, radio link monitoring (RLM) measurement, beam failure detection (BFD) measurement, or positioning reference signal (PRS) positioning measurement that are based on a synchronization signal/physical broadcast channel (PBCH) block (SSB) or a channel state information reference signal (CSI-RS).

17. The method of any of claims 1 to 16, further comprising:

  sending, by the terminal device, a request for updating the beam configuration information to the network device, wherein the request comprises an inter-cell switch request and an intra-cell switch request; and
  receiving, by the terminal device, updated beam configuration information sent by the network device.

18. The method of any of claims 1 to 17, wherein the TCI state, the TCI state list, or the TCI state pattern further comprises: a QCL information type associated with a SSB, a CSI-RS, or a PRS in a serving cell or a non-serving cell, wherein the QCL information type at least comprises QCL-type C or QCL-type D.

19. A method for beam configuration information, comprising:
  sending, by a network device, beam configuration information to a terminal device, the beam configuration information being used for transmission and reception of a physical downlink shared channel (PDSCH) or a physical downlink control channel (PDCCH), the beam configuration information comprising at least one of a transmission configuration indicator (TCI) state identity (ID), a TCI state list, or a TCI state pattern, and the beam configuration information being used for the terminal device to perform beam switch or cell switch.

20. The method of claim 19, further comprising:
  configuring, by the network device, the TCI state pattern according to at least one of a cell, a remote radio head (RRH), or a beam deployed.

21. The method of claim 20, wherein the TCI state pattern corresponds to a set of TCI state IDs or a TCI state list configuration.

22. The method of any of claims 19 to 21, wherein sending, by the network device, the beam configuration information to the terminal device comprises:

  sending, by the network device, the beam configuration information to the terminal device during radio resource control (RRC) reconfiguration or RRC release; or
  sending, by the network device, the beam configuration information to the terminal device through a downlink control information (DCI) or a medium access control (MAC).

**23.** The method of any of claims 19 to 22, wherein the PDSCH or the PDCCH is associated with beams with a same beam index and is configured with same TCI state information; or
the PDSCH or the PDCCH is configured with two TCI states and is associated with beams with different beam indexes.

**24.** The method of claim 23, wherein the beam index is indicated by a reference signal index or a resource ID corresponding to the beam.

**25.** The method of any of claims 19 to 24, wherein

in the beam configuration information, at least two beam indexes corresponding to a same RRH are reused, and beams corresponding to the TCI state pattern or the TCI state list are configured with a same TCI state; or
in the beam configuration information, beam indexes corresponding to adjacent RRHs in a same cell or in different cells are reused, and beams corresponding to the TCI state pattern or the TCI state list are configured with a same TCI state.

**26.** The method of any of claims 19 to 25, wherein beams corresponding to the TCI state pattern or the TCI state list have a same TCI state, and the same TCI state at least comprises a same TCI state ID and a same quasi co-location (QCL) type.

**27.** The method of claim 26, wherein the same TCI state comprises a same or different QCL cell IDs, bandwidth part (BWP) IDs, or reference signals.

**28.** The method of any of claims 19 to 27, wherein

TCI state patterns of different cells are reused; or
TCI state lists or TCI state patterns corresponding to beams of different RRHs are reused; or
TCI state lists or TCI state IDs corresponding to different beams with a same index are reused.

**29.** The method of any of claims 19 to 28, wherein the beam switch comprises switch between beams corresponding to different RRHs in a same cell or switch between beams corresponding to adjacent RRHs during inter-cell switch.

**30.** The method of any of claims 19 to 29, wherein the TCI state, the TCI state list, or the TCI state pattern further comprises:
a quasi co-location (QCL) information type associated with a synchronization signal/physical broadcast channel (PBCH) block (SSB), a channel state information reference signal (CSI-RS), or a positioning reference signal (PRS) in a serving cell or a non-serving cell, wherein the QCL information type at least comprises QCL-type C or QCL-type D.

**31.** A terminal device, comprising:

a transceiver module configured to receive beam configuration information sent by a network device, the beam configuration information being used for transmission and reception of a physical downlink shared channel (PDSCH) or a physical downlink control channel (PDCCH), and the beam configuration information comprising at least one of a transmission configuration indicator (TCI) state identity (ID), a TCI state list, or a TCI state pattern; and
a processing module configured to perform beam switch or cell switch according to the beam configuration information.

**32.** The terminal device of claim 31, wherein the TCI state pattern is configured according to at least one of a cell, a remote radio head (RRH), or a beam deployed by the network device.

**33.** The terminal device of claim 31, wherein the TCI state pattern corresponds to a set of TCI state IDs or a TCI state list configuration.

**34.** The terminal device of any of claims 31 to 33, wherein the transceiver module is specifically configured to:

receive the beam configuration information sent by the network device, during radio resource control (RRC) reconfiguration or RRC release; or
receive the beam configuration information sent by the network device, through a downlink control information (DCI) or a medium access control (MAC).

35. The terminal device of any of claims 31 to 34, wherein the PDSCH or the PDCCH is associated with beams with a same beam index and is configured with same TCI state information; or the PDSCH or the PDCCH is configured with two TCI states and is associated with beams with different beam indexes.

36. The terminal device of claim 35, wherein the beam index is indicated by a reference signal index or a resource ID corresponding to the beam.

37. The terminal device of any of claims 31 to 36, wherein

in the beam configuration information, at least two beam indexes corresponding to a same RRH are reused, and beams corresponding to the TCI state pattern or the TCI state list are configured with a same TCI state; or in the beam configuration information, beam indexes corresponding to adjacent RRHs in a same cell or in different cells are reused, and beams corresponding to the TCI state pattern or the TCI state list are configured with a same TCI state.

38. The terminal device of claim 36, wherein beams corresponding to the TCI state pattern or the TCI state list have a same TCI state, and the same TCI state at least comprises a same TCI state ID and a same quasi co-location (QCL) type.

39. The terminal device of claim 38, wherein the same TCI state comprises a same or different QCL cell IDs, bandwidth part (BWP) IDs, or reference signals.

40. The terminal device of any of claims 31 to 39, wherein

TCI state patterns of different cells are reused; or TCI state lists or TCI state patterns corresponding to beams of different RRHs are reused; or TCI state lists or TCI state IDs corresponding to different beams with a same index are reused.

41. The terminal device of any of claims 31 to 40, wherein the processing module is further configured to: trigger change in the beam configuration information and switch of a TCI state corresponding to the PDSCH or the PDCCH during the beam switch according to a DCI or a media access control-control element (MAC-CE) configured by the network.

42. The terminal device of claim 41, wherein a delay threshold is satisfied when the terminal device performs the beam switch.

43. The terminal device of any of claims 31 to 42, wherein the processing module is specifically configured to:

when performing cell switch, perform beam switch or transmission of the PDSCH or the PDCCH after switching to a target cell according to beam configuration information of a source cell or a non-serving cell, wherein the beam configuration information is indicated by an RRC connection release message; or when performing intra-cell beam switch, perform beam switch or transmission of the PDSCH or the PDCCH after switching to the target cell according to beam configuration information of a serving cell, wherein the beam configuration information is indicated by a DCI, a MAC-CE, or an RRC connection release message.

44. The terminal device of any of claims 31 to 43, wherein the beam switch comprises switch between beams corresponding to different RRHs in a same cell or switch between beams corresponding to adjacent RRHs during inter-cell switch.

45. The terminal device of any of claims 31 to 44, wherein

the processing module is further configured to obtain a measurement result by performing signal measurement according to the beam configuration information; and the transceiver module is further configured to report the measurement result to the network device.

**46.** The terminal device of claim 45, wherein the signal measurement comprises: radio resource management (RRM) measurement, radio link monitoring (RLM) measurement, beam failure detection (BFD) measurement, or positioning reference signal (PRS) positioning measurement that are based on a synchronization signal/physical broadcast channel (PBCH) block (SSB) or a channel state information reference signal (CSI-RS).

**47.** The terminal device of any of claims 31 to 46, wherein the transceiver module is further configured to:

send a request for updating the beam configuration information to the network device, wherein the request comprises an inter-cell switch request and an intra-cell switch request; and
receive updated beam configuration information sent by the network device.

**48.** The terminal device of any of claims 31 to 47, wherein the TCI state, the TCI state list, or the TCI state pattern further comprises:
a QCL information type associated with a SSB, a CSI-RS, or a PRS in a serving cell or a non-serving cell, wherein the QCL information type at least comprises QCL-type C or QCL-type D.

**49.** A network device, comprising:
a transceiver module configured to send beam configuration information to a terminal device, the beam configuration information being used for transmission and reception of a physical downlink shared channel (PDSCH) or a physical downlink control channel (PDCCH), the beam configuration information comprising at least one of a transmission configuration indicator (TCI) state identity (ID), a TCI state list, or a TCI state pattern, and the beam configuration information being used for the terminal device to perform beam switch or cell switch.

**50.** The network device of claim 49, further comprising:
a processing module configured to configure the TCI state pattern according to at least one of a cell, a remote radio head (RRH), or a beam deployed.

**51.** The network device of claim 50, wherein the TCI state pattern corresponds to a set of TCI state IDs or a TCI state list configuration.

**52.** The network device of any of claims 49 to 51, wherein the transceiver module is specifically configured to:

send the beam configuration information to the terminal device during radio resource control (RRC) reconfiguration or RRC release; or
send the beam configuration information to the terminal device through a downlink control information (DCI) or a medium access control (MAC).

**53.** The network device of any of claims 49 to 52, wherein the PDSCH or the PDCCH is associated with beams with a same beam index and is configured with same TCI state information; or
the PDSCH or the PDCCH is configured with two TCI states and is associated with beams with different beam indexes.

**54.** The network device of claim 53, wherein the beam index is indicated by a reference signal index or a resource ID corresponding to the beam.

**55.** The network device of any of claims 49 to 54, wherein

in the beam configuration information, at least two beam indexes corresponding to a same RRH are reused, and beams corresponding to the TCI state pattern or the TCI state list are configured with a same TCI state; or
in the beam configuration information, beam indexes corresponding to adjacent RRHs in a same cell or in different cells are reused, and beams corresponding to the TCI state pattern or the TCI state list are configured with a same TCI state.

**56.** The network device of any of claims 49 to 55, wherein beams corresponding to the TCI state pattern or the TCI state list have a same TCI state, and the same TCI state at least comprises a same TCI state ID and a same quasi co-location (QCL) type.

**57.** The network device of claim 56, wherein the same TCI state comprises a same or different QCL cell IDs, bandwidth part (BWP) IDs, or reference signals.

58. The network device of any of claims 49 to 57, wherein

TCI state patterns of different cells are reused; or
TCI state lists or TCI state patterns corresponding to beams of different RRHs are reused; or
TCI state lists or TCI state IDs corresponding to different beams with a same index are reused.

59. The network device of any of claims 49 to 58, wherein the beam switch comprises switch between beams corresponding to different RRHs in a same cell or switch between beams corresponding to adjacent RRHs during inter-cell switch.

60. The network device of any of claims 49 to 59, wherein the TCI state, the TCI state list, or the TCI state pattern further comprises:
a quasi co-location (QCL) information type associated with a synchronization signal/physical broadcast channel (PBCH) block (SSB), a channel state information reference signal (CSI-RS), or a positioning reference signal (PRS) in a serving cell or a non-serving cell, wherein the QCL information type at least comprises QCL-type C or QCL-type D.

61. A terminal device, comprising:

a transceiver configured to receive beam configuration information sent by a network device, the beam configuration information being used for transmission and reception of a physical downlink shared channel (PDSCH) or a physical downlink control channel (PDCCH), and the beam configuration information comprising at least one of a transmission configuration indicator (TCI) state identity (ID), a TCI state list, or a TCI state pattern; and
a processor configured to perform beam switch or cell switch according to the beam configuration information.

62. The terminal device of claim 61, wherein the TCI state pattern is configured according to at least one of a cell, a remote radio head (RRH), or a beam deployed by the network device.

63. The terminal device of claim 61, wherein the TCI state pattern corresponds to a set of TCI state IDs or a TCI state list configuration.

64. The terminal device of any of claims 61 to 63, wherein the transceiver is specifically configured to:

receive the beam configuration information sent by the network device, during radio resource control (RRC) reconfiguration or RRC release; or
receive the beam configuration information sent by the network device, through a downlink control information (DCI) or a medium access control (MAC).

65. The terminal device of any of claims 61 to 64, wherein the PDSCH or the PDCCH is associated with beams with a same beam index and is configured with same TCI state information; or
the PDSCH or the PDCCH is configured with two TCI states and is associated with beams with different beam indexes.

66. The terminal device of claim 65, wherein the beam index is indicated by a reference signal index or a resource ID corresponding to the beam.

67. The terminal device of any of claims 61 to 66, wherein

in the beam configuration information, at least two beam indexes corresponding to a same RRH are reused, and beams corresponding to the TCI state pattern or the TCI state list are configured with a same TCI state; or
in the beam configuration information, beam indexes corresponding to adjacent RRHs in a same cell or in different cells are reused, and beams corresponding to the TCI state pattern or the TCI state list are configured with a same TCI state.

68. The terminal device of claim 66, wherein beams corresponding to the TCI state pattern or the TCI state list have a same TCI state, and the same TCI state at least comprises a same TCI state ID and a same quasi co-location (QCL) type.

69. The terminal device of claim 68, wherein the same TCI state comprises a same or different QCL cell IDs, bandwidth part (BWP) IDs, or reference signals.

**70.** The terminal device of any of claims 61 to 69, wherein

TCI state patterns of different cells are reused; or
TCI state lists or TCI state patterns corresponding to beams of different RRHs are reused; or
TCI state lists or TCI state IDs corresponding to different beams with a same index are reused.

**71.** The terminal device of any of claims 61 to 70, wherein the processor is further configured to:
trigger change in the beam configuration information and switch of a TCI state corresponding to the PDSCH or the PDCCH during the beam switch according to a DCI or a media access control-control element (MAC-CE) configured by the network.

**72.** The terminal device of claim 71, wherein a delay threshold is satisfied when the terminal device performs the beam switch.

**73.** The terminal device of any of claims 61 to 72, wherein the processor is specifically configured to:

when performing cell switch,
perform beam switch or transmission of the PDSCH or the PDCCH after switching to a target cell according to beam configuration information of a source cell or a non-serving cell, wherein the beam configuration information is indicated by an RRC connection release message; or
when performing intra-cell beam switch,
perform beam switch or transmission of the PDSCH or the PDCCH after switching to the target cell according to beam configuration information of a serving cell, wherein the beam configuration information is indicated by a DCI, a MAC-CE, or an RRC connection release message.

**74.** The terminal device of any of claims 61 to 73, wherein the beam switch comprises switch between beams corresponding to different RRHs in a same cell or switch between beams corresponding to adjacent RRHs during inter-cell switch.

**75.** The terminal device of any of claims 61 to 74, wherein

the processor is further configured to obtain a measurement result by performing signal measurement according to the beam configuration information; and
the transceiver is further configured to report the measurement result to the network device.

**76.** The terminal device of claim 75, wherein the signal measurement comprises: radio resource management (RRM) measurement, radio link monitoring (RLM) measurement, beam failure detection (BFD) measurement, or positioning reference signal (PRS) positioning measurement that are based on a synchronization signal/physical broadcast channel (PBCH) block (SSB) or a channel state information reference signal (CSI-RS).

**77.** The terminal device of any of claims 61 to 76, wherein the transceiver is further configured to:

send a request for updating the beam configuration information to the network device, wherein the request comprises an inter-cell switch request and an intra-cell switch request; and
receive updated beam configuration information sent by the network device.

**78.** The terminal device of any of claims 61 to 77, wherein the TCI state, the TCI state list, or the TCI state pattern further comprises:
a QCL information type associated with a SSB, a CSI-RS, or a PRS in a serving cell or a non-serving cell, wherein the QCL information type at least comprises QCL-type C or QCL-type D.

**79.** A network device, comprising:
a transceiver configured to send beam configuration information to a terminal device, the beam configuration information being used for transmission and reception of a physical downlink shared channel (PDSCH) or a physical downlink control channel (PDCCH), the beam configuration information comprising at least one of a transmission configuration indicator (TCI) state identity (ID), a TCI state list, or a TCI state pattern, and the beam configuration information being used for the terminal device to perform beam switch or cell switch.

80. The network device of claim 79, further comprising:
a processor configured to configure the TCI state pattern according to at least one of a cell, a remote radio head (RRH), or a beam deployed.

81. The network device of claim 80, wherein the TCI state pattern corresponds to a set of TCI state IDs or a TCI state list configuration.

82. The network device of any of claims 79 to 81, wherein the transceiver is specifically configured to:

send the beam configuration information to the terminal device during radio resource control (RRC) reconfiguration or RRC release; or
send the beam configuration information to the terminal device through a downlink control information (DCI) or a medium access control (MAC).

83. The network device of any of claims 79 to 82, wherein the PDSCH or the PDCCH is associated with beams with a same beam index and is configured with same TCI state information; or
the PDSCH or the PDCCH is configured with two TCI states and is associated with beams with different beam indexes.

84. The network device of claim 83, wherein the beam index is indicated by a reference signal index or a resource ID corresponding to the beam.

85. The network device of any of claims 79 to 84, wherein

in the beam configuration information, at least two beam indexes corresponding to a same RRH are reused, and beams corresponding to the TCI state pattern or the TCI state list are configured with a same TCI state; or
in the beam configuration information, beam indexes corresponding to adjacent RRHs in a same cell or in different cells are reused, and beams corresponding to the TCI state pattern or the TCI state list are configured with a same TCI state.

86. The network device of any of claims 79 to 85, wherein beams corresponding to the TCI state pattern or the TCI state list have a same TCI state, and the same TCI state at least comprises a same TCI state ID and a same quasi co-location (QCL) type.

87. The network device of claim 86, wherein the same TCI state comprises a same or different QCL cell IDs, bandwidth part (BWP) IDs, or reference signals.

88. The network device of any of claims 79 to 87, wherein

TCI state patterns of different cells are reused; or
TCI state lists or TCI state patterns corresponding to beams of different RRHs are reused; or
TCI state lists or TCI state IDs corresponding to different beams with a same index are reused.

89. The network device of any of claims 79 to 78, wherein the beam switch comprises switch between beams corresponding to different RRHs in a same cell or switch between beams corresponding to adjacent RRHs during inter-cell switch.

90. The network device of any of claims 79 to 89, wherein the TCI state, the TCI state list, or the TCI state pattern further comprises:
a quasi co-location (QCL) information type associated with a synchronization signal/physical broadcast channel (PBCH) block (SSB), a channel state information reference signal (CSI-RS), or a positioning reference signal (PRS) in a serving cell or a non-serving cell, wherein the QCL information type at least comprises QCL-type C or QCL-type D.

91. A computer-readable storage medium comprising instructions, which, when running on a computer, cause the computer to perform the method of any of claims 1 to 18 or 19 to 30.

RRC

↓

| N CANDIDATE TCI STATES |
|---|

MAC

↓

| K ACTIVATED TCI STATES |
|---|

DCI

↓

| ONE OR TWO TCI STATES FOR USE |
|---|

FIG. 1

NETWORK DEVICE

ACCESS NETWORK DEVICE

| CORE NETWORK DEVICE |
|---|

TERMINAL DEVICE

TERMINAL DEVICE

FIG. 2

| TERMINAL DEVICE | | NETWORK DEVICE |
|---|---|---|

301. BEAM CONFIGURATION INFORMATION

302. PERFORM BEAM SWITCH OR CELL SWITCH ACCORDING TO THE BEAM CONFIGURATION INFORMATION

FIG. 3

One cell

BBU

RRH1

RRH2

beam#1

beam#2

beam#2

beam#1

beam#1

beam#2

FIG. 4A

One cell

BBU

RRH1

RRH2

beam#1

beam#2

beam#2

beam#1

beam#1

beam#2

FIG. 4B

EP 4 307 766 A1

serving cell                    neighbour cell

beam#1
beam#2
cell ident
range
beam#1
beam#2

FIG. 4C

One cell                          BBU

RRH1                                      RRH2

beam#1
beam#2
beam#2
beam#1
beam#1
beam#2

FIG. 4D

27

TERMINAL DEVICE

TRANSCEIVER MODULE 501

PROCESSING MODULE 502

FIG. 5

NETWORK DEVICE

TRANSCEIVER MODULE 601

PROCESSING MODULE 602

FIG. 6

FIG. 7

TERMINAL DEVICE

| TRANSCEIVER 801 | PROCESSOR 802 |

FIG. 8

<div align="center">

**INTERNATIONAL SEARCH REPORT**

</div>

| | International application No. |
|---|---|
| | **PCT/CN2021/083101** |

| A. | CLASSIFICATION OF SUBJECT MATTER |
|---|---|

H04W 36/00(2009.01)i; H04W 72/04(2009.01)i

According to International Patent Classification (IPC) or to both national classification and IPC

| B. | FIELDS SEARCHED |
|---|---|

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS, CNTXT, CNKI, VEN, EPTXT, WOTXT, USTXT, 3GPP: 波束, TCI, 传输配置指示状态标识列表, 传输配置指示, 图样, 小区, 切换, RRC, 索引, 准共址, beam, cell, switch, TCI state list, QCL, pattern, index, tci state pattern, ID, QCL, TCI state ID

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111757475 A (HUAWEI TECHNOLOGIES CO., LTD.) 09 October 2020 (2020-10-09) description, paragraphs [0060]-[0396], and figures 3-7 | 1-91 |
| A | CN 110474751 A (HUAWEI TECHNOLOGIES CO., LTD.) 19 November 2019 (2019-11-19) entire document | 1-91 |
| A | CN 111106907 A (VIVO COMMUNICATION TECHNOLOGY CO., LTD.) 05 May 2020 (2020-05-05) entire document | 1-91 |
| A | CN 109803427 A (HUAWEI TECHNOLOGIES CO., LTD.) 24 May 2019 (2019-05-24) entire document | 1-91 |
| A | US 2021067979 A1 (SAMSUNG ELECTRONICS CO., LTD.) 04 March 2021 (2021-03-04) entire document | 1-91 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2021** | **15 December 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| | International application No. |
|---|---|
| | **PCT/CN2021/083101** |

| Patent document cited in search report | | | Publication date (day/month/year) | Patent family member(s) | | | Publication date (day/month/year) |
|---|---|---|---|---|---|---|---|
| CN | 111757475 | A | 09 October 2020 | WO | 2020192719 | A1 | 01 October 2020 |
| CN | 110474751 | A | 19 November 2019 | None | | | |
| CN | 111106907 | A | 05 May 2020 | None | | | |
| CN | 109803427 | A | 24 May 2019 | CA | 3061633 | A1 | 28 October 2019 |
| | | | | BR | 112019022950 | A2 | 26 May 2020 |
| | | | | JP | 2020521346 | A | 16 July 2020 |
| | | | | JP | 6951025 | B2 | 20 October 2021 |
| | | | | EP | 3606195 | A1 | 05 February 2020 |
| | | | | EP | 3606195 | A4 | 03 June 2020 |
| | | | | KR | 20190140965 | A | 20 December 2019 |
| | | | | KR | 102267573 | B1 | 18 June 2021 |
| | | | | US | 2021289485 | A1 | 16 September 2021 |
| | | | | US | 2020068548 | A1 | 27 February 2020 |
| | | | | US | 11089590 | B2 | 10 August 2021 |
| US | 2021067979 | A1 | 04 March 2021 | WO | 2021040394 | A1 | 04 March 2021 |

Form PCT/ISA/210 (patent family annex) (January 2015)